Europäisches Patentamt

European Patent Office

Office européen des brevets

(19)

(11) Publication number : **0 449 538 A1**

(12) **EUROPEAN PATENT APPLICATION**

(21) Application number : 91302553.2

(22) Date of filing : 22.03.91

(51) Int. Cl.⁵ : H02K 21/14, H02K 1/27

(30) Priority : 30.03.90 GB 9007205

(43) Date of publication of application :
02.10.91 Bulletin 91/40

(84) Designated Contracting States :
DE ES FR GB IT

(71) Applicant : LUCAS INDUSTRIES PUBLIC
LIMITED COMPANY
Brueton House, New Road
Solihull, West Midlands B91 3TX (GB)

(72) Inventor : Chaaban, Farid Bahij, Dr.
57 Kent Road
Sheffield, S8 9RH (GB)
Inventor : Birch, Terrence Stanley, Dr.
13 Parkhead Road
Ecclesall, Sheffield, S11 9RA (GB)
Inventor : Howe, David, Prof.
49 Parkhead Road
Ecclesall, Sheffield, S11 9RA (GB)

(74) Representative : Carpenter, David et al
MARKS & CLERK Alpha Tower Suffolk Street
Queensway
Birmingham B1 1TT (GB)

(54) Dynamo electric machine.

(57) A dynamo electric machine comprises a permanent magnet rotor (16) rotatable within a wound stator (14), characterized in that the rotor (16) comprises a ferromagnetic body (18) supporting $n$ permanent magnets (17) equi-angularly spaced around the rotational axis of the ferromagnetic body (18), the wound stator (14) comprising an annular ferromagnetic body (19) having 1.5 $n$ axially extending slots (21) defining radially inwardly extending poles (22) each pole (22) being encircled by a respective stator winding (24), the windings (24) encircling the first, fourth, seventh, ...... , $n - 2^{th}$ poles (22) being electrically interconnected in series and defining the first phase of the machine, the windings (24) of the second, fifth, eight, ...... , $n - 1^{th}$ poles (22) being electrically interconnected in series and defining the second phase of the machine, and the windings (24) of the third, sixth, ninth, ...... , $n^{th}$ poles (22) being electrically interconnected in series and defining the third phase of the machine.

EP 0 449 538 A1

FIG 2

This invention relates to a three-phase, permanent magnet, dynamo electric machine particularly but not exclusively a generator intended for use in a rail vehicle application wherein the generator is supported on a wheel-hub/axle assembly of the rail vehicle such that rotation of the wheel gives rise to relative rotation between the rotor and stator of the generator.

It is an object of the present invention to provide, in a simple and convenient form, a three-phase dynamo electric machine, in particular a generator which can, at a relatively low rotational speed, generate peak open-circuit and peak full-load line voltages which are relatively close to one another (the generator has a low voltage regulation), and which can maintain such performance through a wide temperature range (for example from -40°C to +90°C).

In accordance with the present invention there is provided a dynamo electric machine comprising a cylindrical permanent magnet rotor rotatable within a wound stator, the rotor comprising a ferromagnetic body supporting $n$ permanent magnets each of which has its polar axis parallel to the thickness of the magnet and each of which is disposed in the ferromagnetic body of the rotor equi-angularly spaced around the rotational axis of the rotor with its length and width extending axially and radially of the ferromagnetic body respectively, and its polar axis extending generally circumferentially, the wound stator comprising an annular ferromagnetic body having $1.5\,n$ axially extending slots defining $1.5\,n$ radially inwardly extending poles, and, each radially extending pole being encircled by a respective stator winding, the windings encircling the first, fourth, seventh, ...... , $n\text{-}2^{th}$ poles being electrically interconnected in series and defining the first phase winding of the dynamo electric machine, the windings encircling the second, fifth, eighth, ...... , and $n\text{-}1^{th}$ poles being electrically interconnected in series and defining the second phase winding of the machine, and, the windings encircling the third, sixth, ninth, ...... , and $n^{th}$ poles being electrically interconnected in series and defining the third phase winding of the machine.

Preferably the ferromagnetic body of the rotor is laminated.

Preferably said permanent magnets are ferrite permanent magnet material.

The invention will further be described by way of example with reference to the accompanying drawings wherein:-

Figure 1 is a sectional view of a wheel-hub/axle assembly of a rail vehicle diagrammatically illustrating the incorporation therein of a generator in accordance with one example of the present invention,

Figure 2 is a diagrammatic sectional view of the generator of Figure 1,

Figure 3 is a circuit diagram of the phase winding arrangement of the generator,

Figure 4 is a view similar to Figure 2 of a modification.

Figure 5 is a sectional view of a second embodiment of a rotor for use in the generator of Figure 1, and,

Figure 6 is a section view of the rotor of Figure 5 at one stage of its construction.

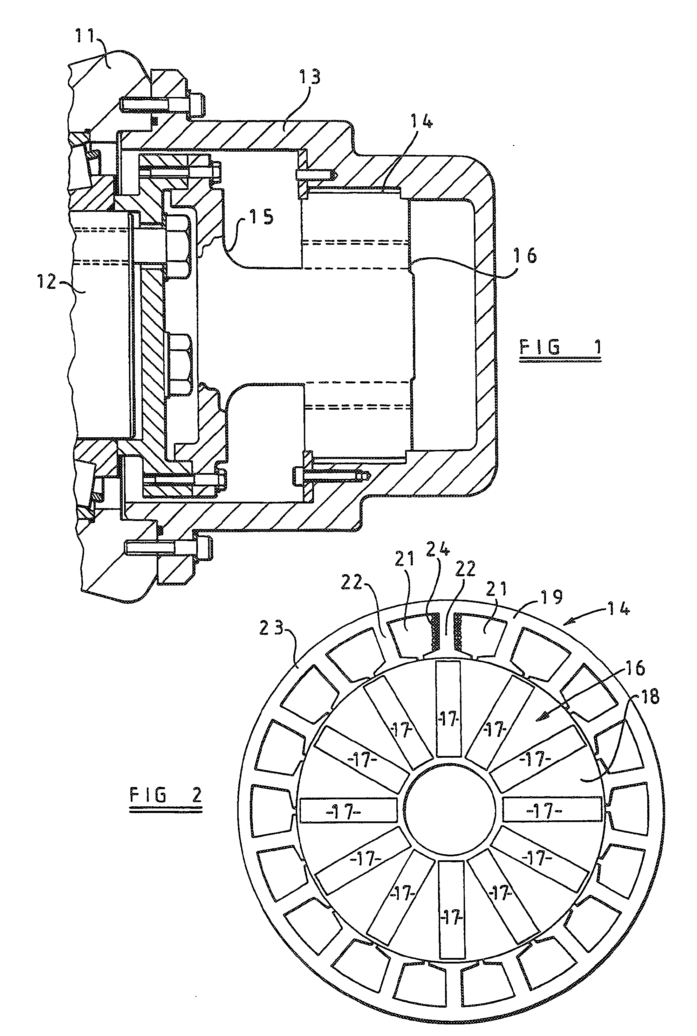

Referring first to Figure 1 of the drawings there is illustrated part of a wheel-hub/axle assembly of a high speed rail vehicle, in which a housing 11 secured to the chassis of the vehicle through a suspension system, carries a bearing assembly within which a stub axle 12 is rotatably mounted. The stub axle 12 extends to the left from the view seen in Figure 1, and at its end carries the rail engaging wheel of the rail vehicle so that the wheel can rotate relative to the housing 11 with the stub axle 12, and supports the chassis of the vehicle through the suspension system.

The relatively stationary housing 11 has an extension 13 bolted thereto, the extension 13 generally being in the form of a hollow cylinder closed at its end remote from the housing 11. Fixed to the interior of the extension 13 and coaxial therewith is an annular, cylindrical stator assembly 14 of a three-phase generator. A shaft extension 15 is bolted to the end of the stub axle 12 and projects therefrom into the extension 13 of the housing 11. The shaft extension 15 is coaxial with the extension 13 and stub axle 12 and carries, within the confines of the annular stator assembly 14, a permanent magnet rotor assembly 16. It will be recognised therefore that when the wheel of the rail vehicle rotates relative to the chassis of the rail vehicle the rotor assembly 16 is rotated within the stator assembly 14.

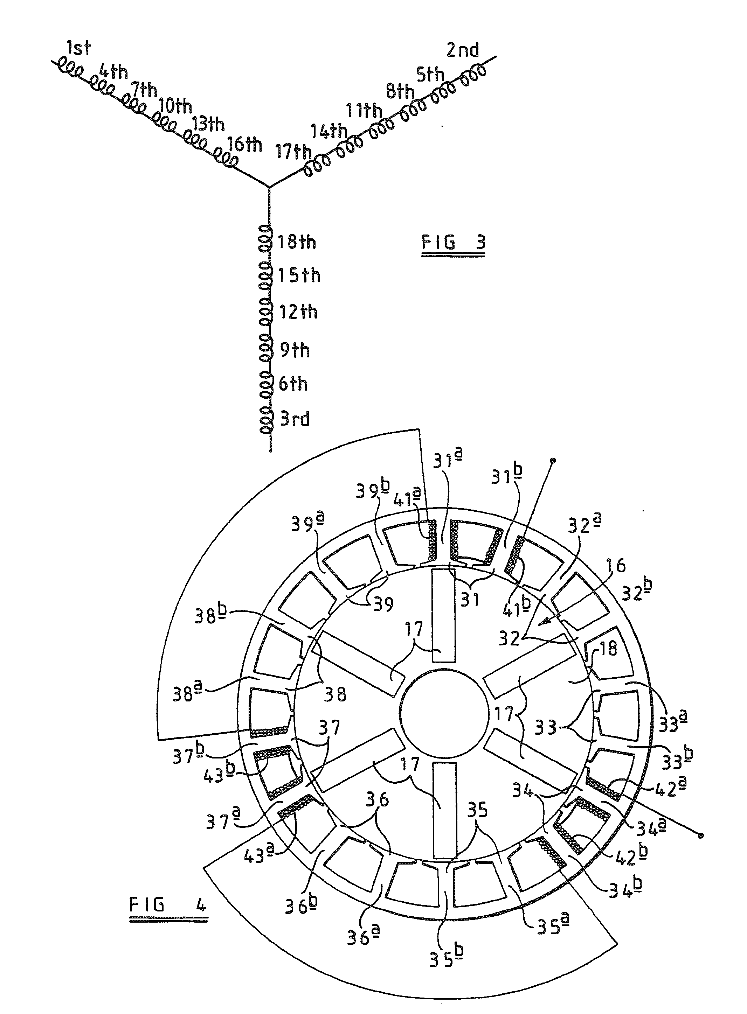

Referring now to Figures 2 and 3 in addition to Figure 1, the rotor assembly 16 is cylindrical and comprises a plurality of permanent magnets 17 supported within a ferromagnetic body 18, the ferromagnetic body 18 being mounted on the shaft extension 15 which, as is apparent from Figure 1, is hollow. The shaft extension 15 is also formed from ferromagnetic material, conveniently mild steel. The ferromagnetic body 18 of the rotor assembly 16 is of laminated construction, comprising a plurality of annular discs of soft iron, or mild steel, having formed therein a plurality of equi-angularly spaced radially extending rectangular slots. When the rotor body is assembled with the discs in facial contact the slots are aligned and define axially extending passages receiving the permanent magnets 17 respectively.

Each permanent magnet 17 is formed from ferrite permanent magnet material and is rectangular both in plan view, and in cross-section. Each of the permanent magnets 17, in plan view, has a length equal to the axial length of the rotor body, a width which is equal to the radial extent of the slots which define the passages in which the permanent magnets are received, and each permanent magnet has a thickness equal to the width of the slots. Furthermore, each permanent magnet is polarised such that its polar axis is parallel to the thickness dimension, and thus each permanent magnet presents a north pole to one radially extending face of its passage in the laminated rotor body, and presents its south pole to the opposite radially extending face. Moreover the magnets are so orientated that circumferentially of the rotor each magnet presents is face of one polarity to the face of the same polarity of the next adjacent magnet. Thus a north pole of one magnet is presented to the north pole of the next magnet which presents its south pole to the south pole of the next magnet and so on. The polar axes of the magnets 17 thus extend generally circumferentially of the rotor assembly. For convenience the slots which receive the magnets 17 do not break the outer periphery of the body 18 although the thickness of material between the radially outermost edge of each magnet and the air gap between the rotor and the stator is very small. Moreover the radially innermost regions of the magnets 17 are close to one another circumferentially and are close radially to the central passage of the body in which the rotor shaft is received; this arrangement results in saturation of the material of the body adjacent the radially innermost regions of the magnets so minimising flux leakage in to the shaft region and permitting the use of a mild steel or other ferromagnetic rotor shaft. In the completed rotor assembly the laminated rotor body 18 holds the magnets 17 rigidly in position relative to one another.

In a modification the magnets 17 are formed from a rare-earth permanent magnet material, for example a neodymium-iron-boron material, and in consequence of the higher energy of such material, the magnets can be smaller, for a given machine, than ferrite magnets. The size reduction can be in either or both of the circumferential and radial directions and thus the radially innermost ends of the magnets may be spaced apart more than would be the case with ferrite magnets. However it would still be desirable to achieve saturation of the ferromagnetic material of the rotor body at the radially innermost ends of the body to avoid the need to make the rotor shaft from non-ferromagnetic (and thus expensive) materials and so if the machine diameter cannot be reduced to bring the magnets into closer proximity then it may be necessary to effect other measures to achieve saturation. For example, the magnets could be of an inverted T-shape in cross-section so that the "cross-members" of the T-section are circumferentially close to one another thus saturating the narrow intermediate portions of the body. Also is would be possible to use plain magnets seated in slots of inverted T-section such that the ends of the "cross-members" of the slots would be empty of magnet material but the narrow intermediate portions of the body would still saturate.

The stator assembly 14 is annular, and includes a laminated, slotted stator body 19, there being 1.5 $n$ equiangularly spaced axially extending slots 21 defining between them 1.5 $n$ equi-angularly spaced poles 22, where $n$ is the total number of permanent magnets 17 in the rotor assembly 16. Thus in the example illustrated in the drawings $n = 12$, there being twelve permanent magnets 17 and eighteen poles 22. The stator body 19 comprises a plurality of identical annular discs of mild steel or soft iron clamped, or otherwise secured together such that the passages defined by the slots 21 extend axially. Thus each pole 22 has an axial dimension, and projects radially inwardly from an integral back-iron 23 which interconnects all of the poles 22. At its radially innermost end each pole 22 has integral, oppositely directed circumferential extensions so that the area of each concave, part cylindrical pole face presented to the rotor 16 is greater than the cross-sectional area of the main part of the pole. The circumferential gaps between adjacent pole tips are thus considerably smaller than the pole face area presented to the rotor.

The stator assembly 14 is a wound stator assembly there being an individual winding 24 encircling each pole 22. The windings 24 lie in the slots 21, and the eighteen windings 24 are electrically interconnected such that the six windings encircling the first, fourth, seventh, tenth, thirteenth, and sixteenth poles respectively are electrically connected in series and define a first phase-winding, or arm, of the three-phase arrangement, the six windings 24 encircling the second, fifth, eighth, eleventh, fourteenth, and seventeenth poles 22 respectively are electrically interconnected in series to constitute the second phase-winding or arm, and the six windings 24 encircling the third, sixth, ninth, twelfth, fifteenth, and eighteenth poles 22 respectively are electrically interconnected in series to constitute the third phase-winding or arm. The three phase windings, or phase arms are electrically interconnected in a star configuration, the winding arrangement being illustrated diagrammatically in Figure 3.

If a rectified output is required from the generator then the three phase points of the star connected phase windings will be connected to respective input terminals of a three-phase full-wave rectifier which can be accommodated in any convenient location. For example it is possible that such a rectifier could be positioned within the housing extension 13. It should be recognised that as the rotor assembly 16 rotates within the stator assembly 14 the generated E.M.F. in each phase will be sinusoidal, with the generation in each of the three phases spaced by 120° as is usual in a three-phase machine. In one example of a machine as illustrated in Figures 1, 2 and 3 pulses generated in one of the windings 24 are used to provide a control input for an antiskid braking system (A.B.S.) associated with the wheel of the rail vehicle and the generator is able to generate a peak open-circuit line voltage of 8 volts when the rotor rotates at 29 rpm and a peak full-load line voltage of 6 volts at the same rotational speed. Thus the maximum voltage regulation does not exceed 2 volts peak line-to-line (33 %). This performance is maintained through a temperature range of -40°C to +90°C, and the construction of the generator is such that it can accommodate operational speeds of the vehicle up to at least 200 km/hr, 29 rpm corresponding to 5 km/hr.

The generator producing this performance had the form illustrated in Figures 2 and 3 and the following dimensions:-

| | |
|---|---|
| Stator outer diameter | 191 mm |
| Stator internal diameter | 138 mm |
| Number of poles | 18 |
| Backiron thickness (radial) | 6 mm |
| Pole thickness (circumferential) | 7 mm |
| Circumferential gap between pole tips | 3 mm |
| Pole tip taper | 3 mm to 1 mm |
| Stator winding turns | 69 per pole |
| Stator winding wire diameter | 1.06 mm |
| Phase winding resistance | 1.05 ohms/ phase at 90°C |
| Rotor outer diameter | 137 mm |
| Rotor internal diameter | 41.30 mm |
| Number of ferrite magnets | 12 |
| Magnet polar thickness | 11 mm |
| Magnet radial dimension | 43.85 mm |
| Thickness of rotor body outwardly of magnets | 1 mm |
| Circumferential gap between magnets at radially innermost ends | 1.5 mm |
| Axial length of stator, rotor, and magnets | 50 mm |

In a modification of the machine described above the stator poles are split poles in that each comprises a pair of circumferentially spaced, radially extending, individually wound parts, the two winding parts being in series and together being the equivalent of one winding 24. Such an arrangement is shown in Figure 4 where the rotor has six magnets 17 and the stator has nine poles 31 to 39 respectively, each of which is of two part construction, the two parts being indicated by the suffix _a_ and _b_. Figure 4 shows one phase winding comprising, in series, three two-part windings 41, 42, 43 each of which is associated with a respective split pole 31, 34, 37. Thus winding 41 has a first part 41_a_ wound on one limb 31_a_ of pole 31 and, in series, a second part 41_b_ wound on the other limb 31_b_ of pole 31. The same winding arrangement is employed in relation to the poles 34 and 37, the two parts of each winding 41, 42, 43 being connected in series and the three windings 41, 42, 43 themselves being connected in series to define a phase winding. The poles 32, 35, 38 will be similarly wound to provide a second phase winding as will the poles 33, 36, 39 to provide a third phase winding.

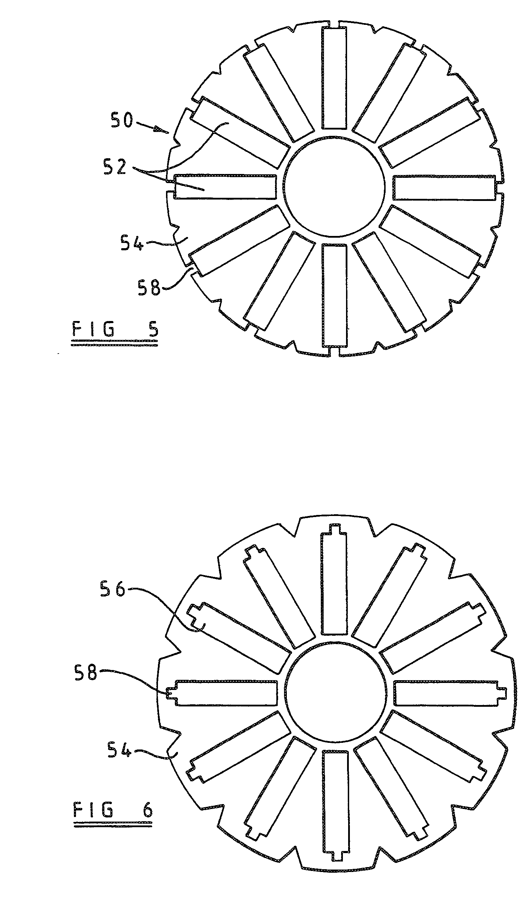

Another embodiment of a rotor is shown in Figure 5. The rotor 50 of this embodiment is suitable for use in conjunction with the stator as described in the first embodiment. The rotor 50 comprises a cylindrical, laminated ferromagnetic body supporting a plurality of permanent magnets 52. The ferromagnetic body comprises a plurality of slotted ferromagnetic annuli 54 held together by axial clamping means or by welding. Each annulus 54 is provided with a plurality of equi-angularly spaced, radially extending rectangular slots 56, the number of slots 56 being equal to the number of permanent magnets 52. Each slot 56 is similar in size and shape to the cross-section of each permanent magnet 52, and the annuli 54 are arranged so that the slots 56 align to form a plurality of axially extending passages, each passage receiving a respective permanent magnet 52.

Each of the slots 56 is open at its radially outermost end, in use, to the air gap between the rotor and the stator of the dynamo, by way of a channel 58. The width of the channel 58 is less than the width of the slot 56, thus preventing the escape, radially outwardly, of each permanent magnet 52 from its respective passage in the rotor body.

A convenient method of producing such a rotor 50 is to produce a plurality of annular discs 54 each provided with a plurality of slots 56 and channels 58, as above, but in which the channels 58 do not open at the outer periphery of their disc 54. One such disc 54 is illustrated in Figure 6. The discs are arranged relative to one another to produce the rotor body so that the slots 56 align and form passages in which permanent magnets 52 are supported, the discs 54 being held together by clamping or welding. The outer periphery of the rotor body so formed is then skimmed to reduce its diameter until sufficient material is removed to expose the channels 58. The permanent magnets 52 are thus exposed at the cylindrical surface of the rotor body directly to the air gap between the rotor and stator rather than being separated therefrom by ferromagnetic material. In the foregoing description it has been convenient to concentrate upon the use of the invention in a generator. It is to be understood that the invention relates to dynamo electric machines and thus can also be used in permanent magnet motors. The construction illustrated in Figure 2 could be utilized as a three phase, permanent magnet motor by applying appropriately phased and switched electrical power to the windings 24.

## Claims

1. A dynamo electric machine comprising a cylindrical permanent magnet rotor rotatable within a wound stator, the machine being characterized in that the rotor comprises a ferromagnetic body supporting $n$ permanent magnets each of which has its polar axis parallel to the thickness of the magnet and each of which is disposed in the ferromagnetic body of the rotor equi-angularly spaced around the rotational axis of the rotor with its length and width extending axially and radially of the ferromagnetic body respectively, and its polar axis extending generally circumferentially, the wound stator comprising an annular ferromagnetic body having 1.5 $n$ axially extending slots defining 1.5 $n$ radially inwardly extending poles, and, each radially extending pole being encircled by a respective stator winding, the windings encircling the first, fourth, seventh, ...... ,$n - 2^{th}$ poles (22) being electrically interconnected in series and defining the first phase winding of the dynamo electric machine, the windings (24) encircling the second, fifth, eighth, ...... , and $n - 1^{th}$ poles (22) being electrically interconnected in series and defining the second phase winding of the machine, and, the windings (24) encircling the third, sixth, ninth, ...... , and $n^{th}$ poles (22) being electrically interconnected in series and defining the third phase winding of the machine.

2. A dynamo electric machine as claimed in Claim 1 characterized in that the ferromagnetic body (18) of the rotor (16) is laminated.

3. A dynamo electric machine as claimed in Claim 1 or Claim 2 characterized in that the permanent magnets (17) are made from a ferrite permanent magnet material.

4. A dynamo electric machine as claimed in any one of the preceding claims characterized in that the permanent magnets (17) are disposed within axial passages provided in the ferromagnetic body (18) of the rotor (16).

5. A dynamo electric machine as claimed in Claim 4 characterized in that said passages open radially of the rotor onto the air gap of the machine.

FIG 1

FIG 2

FIG 3

FIG 4

8

FIG 5

FIG 6

European Patent Office

**EUROPEAN SEARCH REPORT**

Application Number

EP 91 30 2553

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2636480 (ALSTHOM)<br>* page 2, lines 23 - 34; figure 1 * | 1, 2, 4, 5 | H02K21/14<br>H02K1/27 |
| A | EP-A-295718 (SANYO ELECTRIC CO.,LTD.)<br>* page 2, lines 19 - 28; figure 1 * | 1 | |
| A | PATENT ABSTRACTS OF JAPAN<br>vol. 014, no. 012 (E-871) 11 January 1989,<br>& JP-A-01 255494 (ALPS ELECTRIC CO. LTD.) 12 October 1989,<br>* the whole document * | 1 | |
| A | PATENT ABSTRACTS OF JAPAN<br>vol. 09, no. 318 (E-366)(2041) 13 December 1985,<br>& JP-A-60 152240 (SANKIYOU SEIKI SEISAKUSHO K.K.) 10 August 1985,<br>* the whole document * | 1 | |

TECHNICAL FIELDS SEARCHED (Int. Cl.5)

H02K

The present search report has been drawn up for all claims

| Place of search | Date of completion of the search | Examiner |
|---|---|---|
| BERLIN | 12 JULY 1991 | LEOUFFRE, M |